# EUROPÄISCHE PATENTANMELDUNG

(11) **EP 1 388 955 A1**
(43) Veröffentlichungstag der Anmeldung: **11.02.2004**
(21) Anmeldenummer: 03026462.6
(22) Anmeldetag: 20.11.2003
(51) Int. Cl.: H04B 3/54

(54) **Verfahren und Vorrichtung zur Datenübertragung**

(30) Priorität: 18.12.2002 AT 18822002
(71) Anmelder: TMS Produktionssysteme GmbH, A-4031 Linz (AT)
(72) Erfinder: Schmidlechner, Martin, 4873 Frankenburg (AT)
(74) Vertreter: VA TECH Patente GmbH & Co

(57) **Zusammenfassung**

Datenübertragungssysteme, zur Übertragung von Daten von einer Datenquelle zu einem Datenempfänger, sollen für den industriellen Einsatz einerseits kostengünstig sein und andererseits eine hohe Flexibilität und Datenübertragungsrate aufweisen, sowie eine hohe Störsicherheit besitzen, um auch in rauer Industrieumgebung eine sicher Datenübertragung zu gewährleisten. Ein solches System wird durch die vorliegende Erfindung offenbart, indem jeweils eine den Phasen oder dem Nullleiter eines elektrischen Netzes entsprechendes Signal für kurze Zeitspannen auf eine Signalleitung geschalten werden, wobei den Phasen bzw. dem Nullleiter ein bestimmter Informationsgehalt zugeordnet wird.

## Beschreibung

Die vorliegende Erfindung betrifft ein Verfahren zur Übertragung von Daten von einer Signalquelle zu einem Signalempfänger über zumindest eine Signalleitung und einer Vorrichtung zur Durchführung dieses Verfahrens, sowie die Verwendung des Datenübertragungsverfahrens in einem Transportsystem.

Bisherige bekannte Datenübertragungsverfahren sind aufgrund ihrer jeweiligen spezifischen Merkmale mit Nachteilen versehen, die ihre Anwendbarkeit einschränken. So kann zum Beispiel eine RS485-Schnittstelle in hoch gestörten Systemen - im besonderen in solchen mit Schleifschienen - nur mit teuren Pegelhochsetzern betrieben werden und benötigen immer zwei Signalleitungen respektive Schleifschienen selbst für nur unidirektionalen Betrieb. Die Technologie der Powerline-Übertragung ist dahingegen technisch aufwendig und damit teuer. Außerdem ist die Übertragung mit solchen Verfahren im Industriebereich nicht sicher genug und die Abstrahlung des modulierten Trägers kann bei ungünstigen Anordnungen, aus EMV-Gründen, ein Problem darstellen. Systeme mit Schlitzhohlleitern sind zwar leistungsfähig aber dafür hardwaremäßig sehr teuer. Andere bekannte Systeme nutzen z.B. Halb- und/oder Vollwellen der Versorgungsspannung, bzw. der Versorgungsspannungen in mehrphasigen Netzen, zur Datenübertragung, indem die Halb- bzw. Vollwellen auf eine Signalleitung durchgeschalten werden. Ein solches System ist z.B. aus der AT 405 702 B bekannt. Solche Systeme, Voll- bzw. Halbwellenderivate, sind nun zwar kostengünstig, weisen aber den Nachteil einer sehr eingeschränkten Übertragungsrate auf, die für viele Anwendungen nicht ausreicht und daher nicht eingesetzt werden können.
Nichts desto trotz benötigt man häufig ein kostengünstiges Datenübertragungssystem, welches aber noch ausreichend Bitbandbreite für die Datenübertragung zur Verfügung stellen kann.

Gewünscht ist oftmals ein Datenübertragungsverfahren, dessen Bitrate ausreichend hoch gewählt werden kann, um mit vielen Übertragungsteilnehmern individuell und bei Bedarf auch bidirektional Daten austauschen zu können. Da speziell bei mobilen Transportsystemen, zum Beispiel Elektrohängebahnen, mit Schleifschienen gearbeitet werden muss, sollten für das Übertragungsverfahren selber auch so wenige elektrische Verbindungen wie möglich nötig sein, im Idealfall Null (durch Aufmodulieren auf eine bestehende Versorgungsleitung) oder Eins. Damit der Einsatz in rauer, gestörter Industrieumgebung möglich ist, sollte außerdem sowohl die Störsicherheit groß als auch die eigene Störabstrahlung gering sein, um eine gute Zusammenarbeit mit anderen, bestehenden Systemen zu ermöglichen. Gerade bei den bereits genannten ungeschirmten Schleifschienensystemen stellt dies eine besondere Herausforderung dar, da das Leitungs- und Schleifschienennetz hier zudem auch besonders weit ausgedehnt sein kann (bis zu mehrere hundert Metern). Die an der Datenübertragung teilhabende Teilnehmerzahl sollte ebenfalls nicht zu stark begrenzt sein, um Transportsysteme dynamisch wachsen lassen zu können. Besonders wichtig für den Einsatz in realen industriellen Transportsystemen ist zusätzlich noch die Forderung nach einer äußerst kostengünstigen Implementierung.

Die gegenständliche Erfindung hat sich nun die Aufgabe gestellt, ein Datenübertragungsverfahren und eine zugehörige Vorrichtung anzugeben, die die oben angeführten Anforderungen erfüllen kann.

Diese Aufgabe wird für das Verfahren erfindungsgemäß dadurch gelöst, dass von der Signalquelle für vorgegebene Zeitspannen jeweils ein einer Phase eines ein- oder mehrphasigen Netzes oder einem Nullleiter dieses Netzes entsprechendes Signal auf die Signalleitung geschalten wird, wobei die Zeitspannen kleiner der halben Periodendauer des einoder mehrphasigen Netzes gewählt wird, jeder der verwendeten Phasen und/oder dem Nullleiter ein Informationsgehalt zugeordnet wird, das auf die Signalleitung geschaltete Signal von zumindest einem Signalempfänger empfangen und von diesem der Informationsgehalt des übertragenen Signals ermittelt wird. Für die Vorrichtung wird diese Aufgabe gelöst, indem in der Signalquelle eine Signalerzeugungseinheit vorgesehen ist, mit der für vorgegebene Zeitspannen ein Signal erzeugbar ist, welches einer Phase eines ein- oder mehrphasigen Netzes oder einem Nullleiter dieses Netzes entspricht, wobei die Zeitspanne kleiner der halben Periodendauer des ein- oder mehrphasigen Netzes ist und durch die Signalerzeugungseinheit jeder Phase und/oder dem Nullleiter ein Informationsgehalt zugeordnet ist, dieses erzeugte Signal mittels der Signalerzeugungseinheit auf eine Signalleitung schaltbar ist, der Signalempfänger zum Empfangen des Signals mit der Signalleitung verbunden ist und der Signalempfänger eine Auswerteeinheit aufweist, mit der der Informationsgehalt aus dem übertragenen Signal ermittelbar ist.
Dadurch dass in kleinen Zeitschlitzen übertragen wird, kann die Übertragungsrate, also die Menge der übertragbaren Information pro Zeiteinheit und als direkte Folge auch die Teilnehmeranzahl praktisch beliebig groß gewählt werden kann. Durch die Länge der Zeitschlitze kann indirekt, über die Auswerteeinheit und die notwendige Flankensteilheit, auch die eigene Störabstrahlung beeinflusst werden. Außerdem kommt dieses Datenübertragungssystem mit nur einer Signalleitung aus, was die zusätzlichen Kosten verringert.

Die Auswertung des übertragenen Signals und damit die Rückgewinnung der übertragenen Information wird sehr einfach durch Vergleich des übertragenen Signals mit den Phasen und/oder dem Nullleiter des Netzes, oder einer gleichwertigen Methode, durchgeführt. Eine geeignete Vergleicherschaltung kann sehr einfach und kostengünstig implementiert werden, was die Gesamtkosten einer solchen Vorrichtung, insbesondere bei einer großen Anzahl an Signalempfängern, erheblich reduzieren kann.

Alternativ je nach Gegebenheiten wird vorteilhaft entweder eine Phasen des ein- oder mehrphasigen Netzes oder dessen Nullleiter, oder ein eigens erzeugtes Signal auf die Signalleitung durchgeschaltet.

Das Übertragungsverfahren vereinfacht sich erheblich, wenn Zeitspannen von im Wesentlichen gleicher Dauer gewählt werden und diese noch zusätzlich zu den Phasen des Netzes synchronisiert werden.

Das Übertragungsverfahren wird besonders flexibel, wenn digitale Information übertagen wird, also der Informationsgehalt einem Bit, also der Information "0" und "1", und/oder einem Bitmuster, also einer Folge von "0" und "1 ", entspricht.

Die Übertragungsrate kann erhöht werden, wenn positiven und negativen Signalen ein unterschiedlicher Informationsgehalt zugeordnet wird, da dann bei gleicher Anzahl von Zeitschlitzen mehr Information übertragen werden kann.

Ein besonders leistungsfähiges und flexibles Übertragungsverfahren erzielt man dadurch, dass der Informationsgehalt einer vorgegebenen Anzahl aufeinanderfolgender Zeitspannen im Signalempfänger als ein Befehl interpretiert wird. Die Befehle können dabei beliebig gestaltet werden, womit ein nahezu beliebiges Übertragungsprotokoll, also auch bekannte Busprotokolle, einfach implementiert werden können.

Die Übertragungsverfahrensicherheit wird erhöht und die Fehlerhäufigkeit verringert, wenn mögliche zweideutige Signalzustande herausgefiltert werden, sodass zu jedem Zeitpunkt ein eindeutiges Signal empfangen wird und die übertragene Information zu jedem Zeitpunkt eindeutig ermittelbar ist.

Die Flexibilität des Übertragungsverfahrens kann noch weiter gesteigert werden, indem unterschiedlichen Phasen bzw. Nullleiter und/oder der Polarisierung des übertragenen Signals unterschiedliche Übertragungskanäle zugeordnet werden. Damit stehen mehrere Übertragungskanäle zur Verfügung, die durch das Übertragungsverfahren unterschiedlich genutzt werden können, z.B. als Adress-, Steuer- und Datenkanal. Dadurch können auch separate Adress-, Steuer- und Datenbefehle geendet werden und mit mehreren Transportfahrzeugen unterschiedlicher Adresse kommuniziert werden kann.

Das Schalten der Signalzustände auf der Signalleitung erfolgt sehr einfach und kostengünstig durch Schalter, vorzugsweise mechanische oder elektronische Schalter.

Die Störanfälligkeit der Signalempfänger erhöht sich, wenn ein Eingang und ein Ausgang der Auswerteeinheit elektrisch voneinander getrennt, vorzugsweise mittels Optokoppler, ausgeführt sind, da es dann zu keinen unerwünschten Rückkopplungen kommen kann.

Ein erfindungsgemäßes Datenübertragungsverfahren kann sehr vorteilhaft in einem Transportsystem mit zumindest einer Steuereinheit und einer Anzahl von Transportfahrzeugen, die entlang einer Förderstrecke transportiert und von der Steuereinheit zumindest teilweise gesteuert werden, indem von der Steuereinheit zu den Transportfahrzeugen, bzw. umgekehrt, Daten übertragen werden, angewendet werden. Solche System weisen in der Regel eine große Anzahl von Transportfahrzeugen auf, weshalb sich die besonderen Vorteile dieses Verfahrens, niedrige Kosten, hohe Flexibilität, hohe Datenübertragungsrate, besonders stark auswirken.

Wenn die Steuereinheit und die Transportfahrzeuge zum Senden bzw. Empfangen von unterschiedlichen Datenformaten ausgeführt sind, lassen sich entlang der Förderstrecke unterschiedliche Datenübertragungsprotokolle implementieren, die genau auf die Anforderungen der jeweiligen Strecke abgestimmt sein können, wodurch die Gesamtkosten des Transportsystem weiter gesenkt werden können.

Die Erfindung wir anhand der beispielhaften, nicht einschränkenden Figuren 1 bis 7 beschrieben, wobei
- Fig. 1: ein beispielhaftes Datenübertragungsverfahren beschreibt,
- Fig. 2 bis 4: schematisch Möglichkeiten zur Generierung der Datensignale zeigen,
- Fig. 5: schematisch ein Beispiel einer Auswerteschaltung angibt und
- Fig. 6 und 7: schematisch ein Transportsystem zeigen.

Die Beschreibung des erfindungsgemäßen Datenübertragungsverfahren und -systems erfolgt im Folgenden in drei Teilen. Im ersten Teil wird das grundsätzliche Prinzip des Verfahrens erklärt, im zweiten werden beispielhaft Möglichkeiten zur Generierung der Datensignale und im dritten Teil beispielhaft Möglichkeiten zur Auswertung der Datensignale beschrieben.

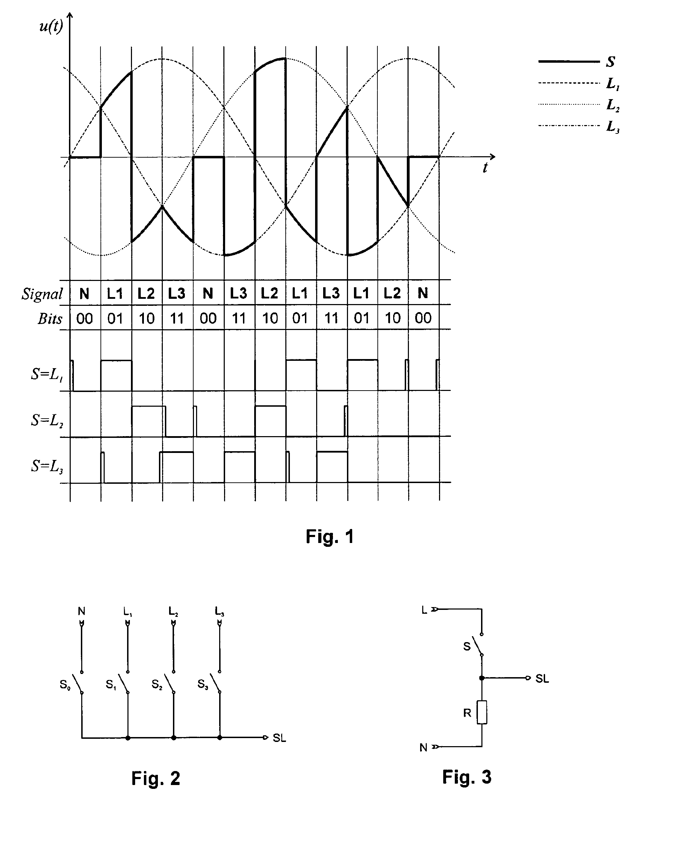

Nach dem Beispiel der Fig. 1, erfolgt die Datenübertragung beim erfindungsgemäßen Übertragungssystem mittels eines Signals S, welches über eine Signalleitung SL gesendet wird, in Zeitschlitzen vorgegebener konstanter Länge, die hier zu den Phasen L₁, L₂ und L₃ synchronisiert sind. Diese Zeitschlitze können ein Bruchteil oder Vielfaches der Frequenz eines ein- oder mehrphasigen Netzes sein, könnten aber genauso gut unabhängig von dieser sein, und könnten ebenfalls asynchron zu den Phasen sein. Dieses Beispiel wird anhand eines dreiphasigen Netzes, Phasen L₁, L₂ und L₃, mit Nullleiter N beschrieben und als Zeitschlitz wurde 1/12 einer Netzperiode gewählt. Ein Steuersignal S wird hier über eine Signalleitung SL übertragen, wobei die Signalleitung SL, bzw. das Steuersignal S, in jedem Zeitschlitz jeweils einen der folgenden Zustände, hier im konkreten eine Phasenspannung u(t), annimmt:
Eine der vorhandenen Phasenspannungen L₁, L₂ und L₃ (in einem dreiphasigen System wie hier) und eventuell auch die Spannung des Nullleiters. Einer der Pegel könnte dabei auch rezessiv mit einem hinlänglich bekannten Pull-Down Widerstand zum entsprechenden Ruhepegel, beispielsweise dem Nulleiter, sein. Es könnten aber natürlich auch alle möglichen Zustände niederohmig, sprich dominant generiert werden, wie bei Fig. 2 bis 4 noch eingehender beschrieben werden wird.

Bei Verwendung aller vier unterschiedlicher Zustände des dreiphasigen Systems kann jedem Zustand auf der Signalleitung SL ein Informationsgehalt zugeordnet werden. Da hier vier Zustände verwendet werden können also zwei Bits pro Zeitschlitz übertragen werden, wie in der folgenden Tabelle beispielhaft angeführt.

| Signal | Bitmuster |
|---|---|
| N | 00 |
| L₁ | 01 |
| L₂ | 10 |
| L₃ | 11 |

Bei Verwendung von nur zwei unterschiedlichen Zuständen, zum Beispiel nur L₁ und N, ließe sich natürlich nur ein Bit pro Zeitschlitz übertragen, wie in der folgenden Tabelle beschrieben.

| Signal | Bitmuster |
|---|---|
| N | 0 |
| L₁ | 1 |

Damit ist direkt einsichtlich, dass auf diese Weise jede beliebige Bitfolge und damit jede beliebige Information übertragen werden kann.
Es sei aber ausdrücklich darauf hingewiesen, dass die obigen Zuordnungen von Signalzuständen zu Informationsgehalt selbstverständlich nur beispielhaft angeführt sind und grundsätzlich eine beliebige Zuordnung getroffen werden kann. Es könnten natürlich beliebige Phasen verwendet werden, außerdem könnte auch zwischen positiven und negativen Signalzuständen unterschieden werden. Würden z.B. zwei Phasen verwendet und zwischen positiv und negativ unterscheiden, so könnte der gleiche Informationsgehalt erzeugt werden, wie in der ersten Tabelle angeführt. Das Verfahren kann also beliebig an die geforderten Kriterien und an die besonderen Gegebenheiten angepasst werden.
Mit der jeweils gewählten Zuordnung soll nur sichergestellt werden, die notwendige Information in der geforderten Zeit übertragen zu können.

In Fig. 1 ist ein mögliches, beispielhaftes Signal S auf der Signalleitung SL dargestellt. In diesem Beispiel kommt ein dreiphasiges Netz mit Nullleiter zum Einsatz, es werden also alle vier möglichen Zustände N, L₁, L₂ und L₃ verwendet. Ein Zeitschlitz entspricht hier einem

Zwölftel einer Periode des Netzes, bei 50Hz sind das also 1,6*ms,* wobei die Zeitschlitze mit dem Netz synchronisiert sind. Gesendet wird beispielhaft das Bitmuster 00 01 10 11 00 11 10 01 11 01 10 00, was mit der obigen Zuordnungstabelle der Signalfolge N, L₁, L₂, L₃, N, L₃, L₂, L₁, L₃, L₁, L₂, N auf der Signalleitung SL entspricht. In Fig. 1 beginnt die Übertragung mit dem Nulldurchgang von L₁ und ist genau eine Periode lang. Beides ist im Sinne der Erfindung, jedoch nur beispielhaft und nicht einschränkend, sondern ist im Wesentlichen frei wählbar, wie weiter oben bereits ausgeführt.
Wie aus Fig. 1 entnommen werden kann, wird in jedem Zeitschlitz auf die Signalleitung SL jeweils genau eine Phase L₁, L₂ und L₃ bzw. der Nullleiter N aufgeschalten. Da zwischen zwei Signalen direkt umgeschalten wird, ohne zwischen zwei Zeitschlitzen eine Pause vorzusehen, kann es vorkommen, dass zum Zeitpunkt des Schaltens keine eindeutige Zuordnung des aktuellen Signals an eine Phase oder dem Nullleiter möglich ist, sodass bei der Auswertung unter Umständen kurze Spannungspulse entstehen können, die natürlich ungewollt sind, das übertragene Signal verfälschen und daher ausgefiltert werden sollten, wie weiter unten noch eingehender beschrieben.
Man könnte jedoch auch vorsehen nur auf jedem zweiten Zeitschlitz zu senden, wobei man dann aber ein Signal als "Pausensignal", z.B. den Nullleiter N, benötigen würde, was die Bitrate erheblich einschränken würde.
Sowohl die Dauer einer Übertragung als auch der Start- und Endzeitpunkt kann, wie in Fig. 1 gezeigt, muss aber nicht an die Netzfrequenz gekoppelt sein. Gleiches gilt, wie schon erwähnt, für die Wahl der Bitrate, also für die Länge der Zeitschlitze, und der Anzahl der Zustände. Diese Details können erst bei der Umsetzung eines konkreten Problems festgelegt werden und hängen von Bedingungen ab, die durch die jeweilige Anwendung problemspezifisch festgelegt werden können.

Es sei weiters darauf hingewiesen, dass die in Fig. 1 unendlich steil eingezeichneten Schaltflanken vorteilhaft begrenzt und an die Bitrate angepasst werden, um EMV-Abstrahlungen von ungeschirmten Leitungen zu unterbinden. Eine Begrenzung der Flanke auf z.B. 1/10 der Dauer eines Bits stellt kein Problem für die Informationsübertragung dar und reduziert den Oberwellengehalt enorm.

Die Einhaltung von EMV-Vorgaben und das mögliche Auftreten von ungewollten kurzen Spannungspulsen, wie oben beschrieben, stellen dabei eine natürliche Begrenzung der Übertragungsrate dar.

Anhand der Fig. 2 und 3 wird im Folgenden die Generierung der zu übertragenden Signale beispielhaft beschrieben. Vorab sei allerdings schon darauf hingewiesen, dass es natürlich eine Vielzahl von Möglichkeiten und elektrischen Schaltungen gibt, um solche Signale zu erzeugen, wobei es für die Erfindung völlig unerheblich ist, welche dieser Möglichkeiten verwendet wird.

Die Generierung der Signale S erfolgt sehr einfach durch einzelne Schalter S₀, S₁, S₂, S₃ welche das entsprechende Signal S aus dem Netz, also die Phasen L₁, L₂ und L₃ und den Nullleiter N, direkt auf die Signalleitung SL durchschalten. Sinnvoller Weise sollte man in realen Anwendungen natürlich auch Vorsorgemaßnahmen treffen, damit die Signalleitung SL kurzschlussfest wird. Da es hierfür verschiedene hinlänglich bekannte praktische Lösungsmöglichkeiten gibt, wird hier nicht näher auf diese Problematik und deren spezielle Lösung eingegangen.

Fig. 2 zeigt eine Prinzipschaltung zur Erzeugung des Signal S auf der Signalleitung SL. Fig. 3 zeigt eine beispielhafte Prinzipschaltung bei Verwendung von nur zwei Zuständen, wobei einer der beiden, hier der Nullleiter N, durch einen Pull-Down Widerstand R rezessiv gesendet wird, während die Phase L dominant gesendet wird. Wird bei allen an einer Signalleitung SL angeschlossenen Geräten die selbe Phase für den dominanten Pegel verwendet, kann es auch ohne entsprechende Spezifikation des Protokollablaufes in höheren Ebenen zu keinen Kurzschlüssen mehr kommen. Außerdem können bekannte moderne Techniken der Busarbitrierung und Fehlererkennung, wie z.B. beim bekannten CAN-Bus, verwendet werden, da diese auf dem Prinzip von zwei Zuständen, rezessiv und dominant, aufbauen. Selbstverständlich kann auch jede beliebige Mischform von Fig. 2 und 3 im Beispiel eines dreiphasigen Systems verwendet werden, z. B. kann der Schalter Sₒ auf dem Nulleiter N in Fig.2 durch einen Widerstand R ersetzt werden, wodurch sich ein rezessiver Pegel für den Nullleiter N ergibt. Genauso könnte der Widerstand R in Fig. 3 durch einen Schalter ersetzt werden.

Es liegt natürlich auch im Rahmen der Erfindung, beispielsweise die Schaltung aus Fig. 2 um einen permanenten oder zuschaltbaren Widerstand zu einem gewünschten rezessiven Pegel, zum Beispiel den Nulleiter N, zu erweitern, um so zwischen unterschiedlichen Verfahren je nach Situation durch entsprechende Ansteuerung der Schalter S₀, S₁, S₂, S₃ zu wechseln. Im Gegenzug dazu kann natürlich auch die Schaltung aus Fig. 3 um einen Schalter ergänzt werden, der den Widerstand R kurzschließt, sodass sich nunmehr- je nach Ansteuerung der Schalter - auch zwei dominante Zustände erzeugen lassen.
Es sei darauf hingewiesen, dass ein rezessiver Pegel einerseits Vorteile im Übertragungsprotokoll bringen kann, jedoch durch den höheren Innenwiderstand weniger störfest ist, und auch geringere Schaltflanken und damit eine geringere Übertragungsrate nach sich zieht. Eine entsprechende Abwägung der Vor- und Nachteile und die tatsächliche Umsetzung obliegt dem Fachmann, der das Verfahren für einen bestimmten Anwendungszweck implementiert.

Der zur Erzeugung des rezessiven Pegels notwendige Pull-Down Widerstand R könnte, falls der rezessive Pegel Nullleiterpotential hat, auch als symmetrischer Widerstand zu allen Phasen L ausgeführt werden. Falls man also in einem Gerät, in welchem kein Nullleiter N zur Verfügung steht, einen Pull-Down zu selbigen bewirken will, erreicht man das in einem dreiphasigen System z.B. durch drei Widerstände dreifachen Wertes zu jeder Phase. Speziell in mobilen Systemen, welche beispielsweise über Schleifschienen versorgt werden, wird häufig auf die Zuführung des Nullleiters N verzichtet, da dies einen zusätzlichen Aufwand bedeuten würde. Durch das für etwaige Antriebsmotoren etc. notwendige Vorhandensein sämtlicher Phasen L kann aber ein Pull-Down zu einem virtuellen Sternpunkt wie oben beschrieben erreicht werden, was elektrisch äquivalent zu einem Pull-Down zum realen Nullleiter N ist.

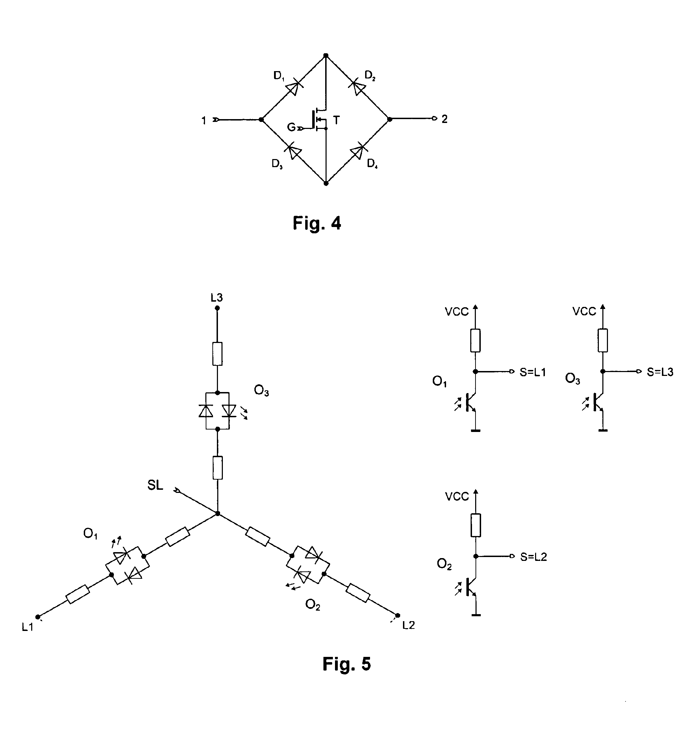

Die in Fig. 2 und 3 symbolisch dargestellten Schalter S₀, S₁, S₂, S₃ sollten aus mehreren Gründen elektronisch implementiert werden: Erstens wäre die geforderte Schaltgeschwindigkeit und zeitliche Schaltpräzision für elektromechanische Komponenten zu groß und zweitens würde die erforderliche Schalthäufigkeit zu einer geringen Lebensdauer elektromechanischer Komponenten führen. Des Weiteren besteht bei ungewolltem Fehlschalten Kurzschlussgefahr auf der Signalleitung SL. Daher wird eine elektronische Implementierung der Schalter S₀, S₁, S₂, S₃ empfohlen. Eine solche Implementierung ist beispielhaft in Fig. 4 gezeigt, in der ein unipolares elektronisches Schaltelement, im Bild z. B. ein Feldeffekttransistor (FET) T, in den Mittelzweig einer Vier-Dioden-Brückenschaltung (D1-D4) geschaltet wird. Leitet das unipolare Schaltelement T, so sind auch die beiden Punkte 1 und 2 wie bei einem Schalter leitend verbunden, natürlich abgesehen von zwei Dioden-Durchflussspannungen. Ist der Feldeffekttransistor T gesperrt, so sind auch die beiden Punkte 1 und 2 elektrisch voneinander isoliert, natürlich wieder abgesehen von den Sperrströmen der Dioden D und des Feldeffekttransistors T. Das elektronische Schaltelement T muss dabei kein FET sein, wie in Fig. 4, sondern es kann sich beispielsweise auch um einen Bipolartransistor oder einen IGBT handeln. Der FET T hat jedoch den Vorteil der beinahe leistungslosen Ansteuerbarkeit. Die für den FET T notwendige Ansteuerleistung kann z.B. mit rein passiven Bauelementen aus anderen Phasen erzeugt werden (Gleichrichtung, Glättung, Serienwiderstand, Zenerdiodenstabilisierung). Zur Übertragung des Ansteuersignals würde sich zum Beispiel auch ein Optokoppler eignen. Die genaue Dimensionierung und Auslegung einer solchen elektronischen Schaltung ist dabei wiederum dem Fachmann überlassen.

Die Auswertung der über die Signalleitung SL übertragenen Signale S auf der Empfängerseite kann beispielsweise sehr einfach durch Optokoppler O durchgeführt werden. Die Optokoppler O werden dabei so geschaltet, dass sie als Vergleicher fungieren, wie in Fig. 5 dargestellt. Insgesamt ist ein Optokoppler O weniger nötig als es gültige Zustände auf der Signalleitung SL gibt: wenn keiner der Optokoppler O Gleichheit liefert, muss es sich automatisch um jenen Zustand handeln, für den kein Vergleicher vorhanden ist, sodass auf diesem Weg Hardware eingespart werden könnte. Diese Einsparung ist im Sinne der Erfindung, jedoch nicht unbedingt notwendig. Ein Optokoppler O vergleicht also das Signal S auf der Signalleitung SL mit jeweils einem der möglichen Signale, hier den drei Phasen L₁, L₂ und L₃. Ausgangsseitig ergibt sich ein HIGH (logisch 1), wenn das Signal S auf der Signalleitung SL gerade dem Vergleichssignal entspricht. Ein vierter Vergleicher, für den Nullleiter N, ist wie schon beschrieben nicht notwendiger Weise erforderlich und fehlt daher auch in Fig. 5. Wenn keiner der Optokoppler O₁, O₂, O₃ anspricht, muss es sich dann um den Nullleiter N handeln.
Die zulässige Spannungstoleranz, die der jeweilige Optokoppler O noch als gleich erkennt, kann in bekannter Weise durch Wahl des Widerstandsverhältnisses Primär/Sekundär in Zusammenhang mit dem Stromübersetzungsverhältnis des Optokopplers O bestimmt werden. Der Primärwiderstand wurde in Fig. 5 auf zwei Widerstände aufgeteilt, um ein besseres EMV-konformes Layout zu ermöglichen, d.h., hochohmige Pfade von allen Phasen L₁, L₂ und L₃ sowie der Signalleitung SL zu den Optokopplern O₁, O₂, O₃.
Die verwendeten bidirektionalen Optokoppler O₁, O₂, O₃ könnten alternativ z.B. auch durch unidirektionale Optokoppler O ersetzt werden, indem man die LED des Optokopplers O in einen Brückengleichrichter schaltet.
Die tatsächliche Schaltungsanordnung kann wiederum nach Bedarf und Anwendung erstellt werden und obliegt einem Fachmann.

Fig. 1 zeigt im unteren Teil auch die an den Ausgängen der Optokoppler O₁, O₂, O₃ von Fig. 5 entstehenden Spannungsverläufe entsprechend dem beispielhaften Spannungsverlauf auf der Signalleitung SL. Aufgrund der notwendigen Toleranzen der als Vergleicher wirkenden Optokoppler O₁, O₂, O₃ ergeben sich an manchen Stellen kurze Spannungspulse (Spikes), welche jedoch ausgefiltert werden können. Die Filterung könnte in bekannter Weise z.B. per Software erfolgen, wäre aber genauso gut in Hardware implementierbar.
Besonders vorteilhaft für die Auswertung ist es, wenn die Zeitschlitze starr an die Netzfrequenz gekoppelt sind, da dadurch genau definiert ist, welcher Zeitbereich jeweils analysiert werden muss.
Die Filterung der systembedingt auftretenden Spikes kann beispielsweise durch bekanntes morphologisches Filtern erfolgen, es würde aber auch genügen, lediglich den Mittelwert für jeden Zeitschlitz zu ermitteln und so eine Mehrheitsentscheidung zu treffen. Da die Optokoppler O₁, O₂, O₃ aus Fig. 5 unter Umständen mehr Information liefern können als es erlaubte Zustände gibt, könnte auch bereits hier eine Fehlererkennung stattfinden, beispielsweise auch für eine Art Selbsttest der Hardware. Von den durch die drei digitalen Ausgängen der Optokoppler O₁, O₂, O₃ möglichen acht Zuständen sind jedoch nur vier gültig, entsprechend der vier gültigen Zuständen auf der Leitung (siehe obige Tabelle).

Mit dem oben beschriebenen Datenübertragungsverfahren kann nun sehr effektiv und schnell Information übertragen werden. Dazu könnten z.B. eine Anzahl von aufeinanderfolgenden Zeitschlitzen zu einem Befehl zusammengefasst werden, der im Empfänger als solcher erkannt wird und eine vorgesehene Handlung verursacht. Der Befehl könnte in bekannter Weise Adressbits, Datenbits und Fehlererkennungs- und Fehlerkorrekturbits enthalten. Es ließe sich also sehr einfach ein bestimmter Empfänger oder eine Gruppe von Empfängern gezielt ansprechen und eine gesicherte Datenübertragung zu diesen verwirklichen.
Außerdem könnte auch ein bidirektionales Protokoll verwirklicht werden, indem z.B. einige Bits den Hinkanal und einige Bits den Rückkanal bilden.

Weiters wäre es denkbar mehrere Übertragungskanäle vorzusehen, indem man z.B. jeder Phase bzw. dem Nulleiter, oder einer Kombination daraus, einen bestimmten Kanal zuordnet. Über die einzelnen Kanäle könnte dann unabhängig Daten übertragen werden.

Grundsätzlich kann mit dem erfindungsgemäßen Datenübertragungsverfahren natürlich jedes bekannte digitale Übertragungsprotokoll implementiert werden. Aus Sicht des bekannten OSI-Schichtenmodells, stellt das oben beschriebene Datenübertragungsverfahren nur die unterste Schicht, also Schicht 1, dar. Die darüber liegenden Schichten, in denen das Übertragungsprotokoll festgelegt wird, können natürlich beliebig gestaltete werden und können hier nicht in ihrer Gesamtheit dargestellt werden.

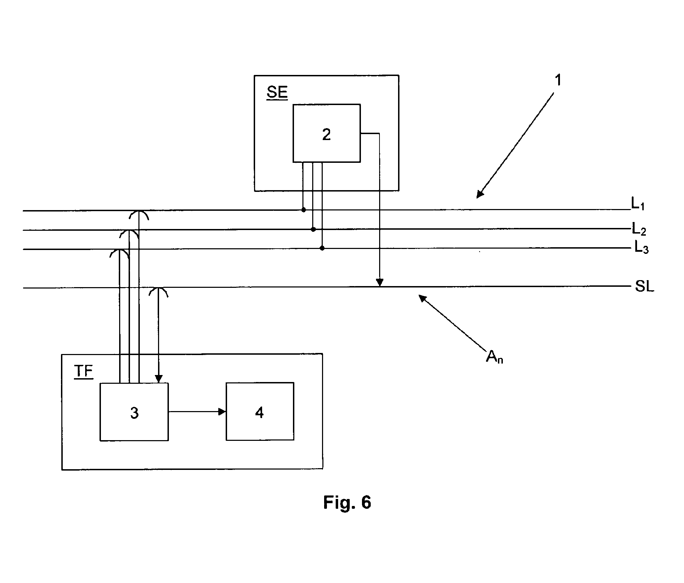

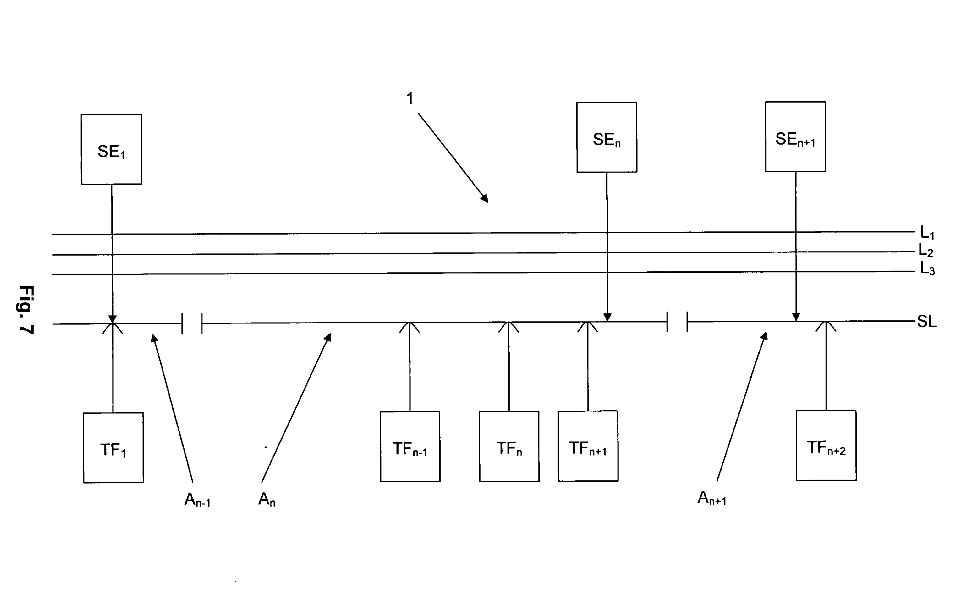

Das oben beschriebene Datenübertragungsverfahren ist nun mannigfaltigst anzuwenden, z.B. äußerst vorteilhaft in einem Transportsystem, in dem eine Vielzahl von Transportfahrzeugen von einer oder mehreren Steuereinheiten angesteuert werden, wie im Nachfolgenden anhand der Fig. 6 und 7 beschrieben. Ein Beispiel für ein solches Transportsystem ist eine Elektrohängebahn in einer Karosseriefertigungsstraße, bei der entlang einer Förderstrecken Transportfahrzeuge mit Bauteilen zwischen Arbeitsstationen, in denen die Bauteile bearbeitet werden, hin- und herbewegt werden.
In Fig. 6 sind die Phasen L₁, L₂ und L₃ des Versorgungsnetzes eines Abschnittes Aₙ des Transportsystems 1 als Schleifschienen ausgeführt und ein Transportfahrzeug TF des Transportsystems 1 greift die Versorgungsspannungen durch angedeutete geeignete Schleifkontakte ab. Grundsätzlich könnten natürlich auch noch weitere Leitungen, wie z.B. eine Erdung oder eine Meldeleitung, vorhanden sein. Weiters ist eine hier ebenfalls als Schleifschiene implementierte Signalleitung SL vorgesehen, über die Befehle von einer Steuereinheit SE zum Transportfahrzeug TF, und bei Bedarf auch umgekehrt, übertragen werden. Die Steuereinheit SE weist dazu eine Signalerzeugungseinheit 2 auf, die Daten, wie z.B. ein oben beschriebener Befehl, auf die Signalleitung SL schaltet. Das Transportfahrzeug TF greift diese Daten über einen Schleifkontakt ab und führt das abgegriffene Signal S einer Auswerteeinheit 3 zu. In der Auswerteeinheit 3 wird das abgegriffene Signal S für jeden vorgegebenen Zeitschlitz mit den Phasenspannungen L₁, L₂ und L₃ verglichen, woraus sich aus dem den Phasen zugewiesenen Informationsgehalt eine Bitfolge ergibt, die einem Dateninterpreter 4 zugeführt wird. Der Dateninterpreter 4 analysiert die Bitfolge und extrahiert daraus die übertragenen Daten, z.B. Befehle, gemäß einem vorgegebenen Muster oder Protokoll.
Der Dateninterpreter 4 veranlasst gegebenenfalls in weiterer Folge die Ausführung des Befehls, z.B. eine Erhöhung der Geschwindigkeit, ein Stopp oder Anfahren, ein Heben bzw. Senken einer Last oder Lastaufnahmeeinheit, etc., im Transportfahrzeug TF.
Die hardwaremäßige Ausführung der Übertragung, z.B. über Schleifschienen, berührungslos, etc., kann dabei natürlich frei gewählt werden.

Im Falle einer bidirektionalen Übertragung, die natürlich ebenfalls umgesetzt werden könnte, würde die Signalerzeugungseinheit 2 gleichzeitig auch als Auswerteeinheit und die Auswerteeinheit 3 gleichzeitig auch als Signalerzeugungseinheit fungieren. Es wäre aber natürlich auch möglich in jede Sende- und Empfangsrichtung eine separate Sende- und Empfangseinheit vorzusehen.

In Fig. 7 sind mehrere Abschnitte Aₙ₋₁, Aₙ und Aₙ₊₁ eines Transportsystems 1 dargestellt. Auf jedem Abschnitt Aₙ₋₁, Aₙ und Aₙ₊₁ können sich eine Anzahl von Transportfahrzeuge TF₁ bis TFₙ₊₂ befinden. Jeder Abschnitt besitzt hier eine eigene Steuereinheit SE₁ bis SEₙ₊₁, die den diesem Abschnitt zugeordneten Transportfahrzeuge steuern.
Das Übertragungsprotokoll könnte z.B. vorsehen, dass sich die Transportfahrzeuge beim verlassen eines Abschnittes bei der zugehörigen Steuereinheit abmelden und bei der Steuereinheit des nachfolgenden Abschnittes wieder anmeldet. Somit könnte sichergestellt werden, dass jedem Transportfahrzeug zu jedem Zeitpunkt genau eine Steuereinheit, nämlich die für den jeweiligen Abschnitt zuständige, zugeordnet ist und die Steuerung dadurch eindeutig ist.
Natürlich wäre es auch denkbar für mehrere Abschnitte nur eine einzige Steuereinheit vorzusehen.

Typischerweise gibt es entlang einer Förderstrecke Abschnitt mit unterschiedlichen Anforderungen, die an die Steuerung der Transportfahrzeuge unterschiedliche Anforderungen stellen, wie z.B. reine Förderstrecken, wo die Transportfahrzeuge möglichst schnell bewegt werden sollen, um Taktzeit einzusparen, oder Montageabschnitte, wo die Transportfahrzeuge für Montagezwecke sehr exakt gesteuert werden müssen und bei Bedarf auch gewisse weitere Aufgaben, z.B. das Heben oder Senken einer Bauteilaufnahme, vornehmen müssen. Es wäre somit auch denkbar und möglich für unterschiedliche Abschnitte je nach Anforderung unterschiedliche Datenübertragungsprotokolle zu implementieren. Für reine Förderstrecken reicht es beispielsweise aus, alle Transportfahrzeuge gemeinsam zu steuern, wobei man mit einigen wenigen Geschwindigkeitsstellbefehlen auskommt. Entlang von Montagestrecken sind aber oftmals eine Vielzahl von Befehlen, z.B. eine Vielzahl von unterschiedlichen Geschwindigkeitsstellbefehlen, erforderlich und jedes Transportfahrzeug wird sinnvoller Weise einzeln angesteuert. Die Transportfahrzeuge sind dabei vorzugsweise so ausgeführt, dass sie diese unterschiedlichen Datenübertragungsprotokolle automatisch erkennen und umsetzen können. Dadurch können auch unterschiedliche Steuereinheiten zur Implementierung unterschiedlicher Datenübertragungsprotokolle für die unterschiedlichen Abschnitte zum Einsatz kommen.

In Abschnitten in denen die Geschwindigkeit ganz besonders genau eingehalten werden muss, z.B. in Montageabschnitten, könnten die Geschwindigkeiten der Transportfahrzeuge auch in einem Geschwindigkeitsregelkreis geregelt werden. Dazu wird beispielsweise von einem Sensor, der beispielsweise am Motor angeordnet ist, die aktuelle Geschwindigkeit zurückgeliefert, die von einem Regler verwendet wird, um auf eine vorgegebene Geschwindigkeit genau zu regeln bzw. um eine möglichst gleichbleibende Geschwindigkeit sicherzustellen.
Dazu kann auch eine Kalibrierstrecke vorgesehen sein, eventuell an einer geeigneten Stelle entlang der Fahrstrecke, auf der der Regler bzw. der Sensor automatisch kalibriert wird, um Abnützungen automatisch ausgleichen zu können.

Die sehr große Anzahl mit dem erfindungsgemäßen Verfahren erreichbaren Befehlen ermöglicht noch eine weitere Anwendung, indem nun ein busähnliches System implementiert wird, das mit einer einzigen Signalleitung SL auskommt. Damit lässt sich zumindest ein undirektionales Bussystem aufbauen.
Beispielsweise könnte ein Bussystem implementiert werden, dass bestimmte Befehle bzw. Befehlsgruppen als Adressbefehl, zur Auswahl eines Transportfahrzeuges oder einer Gruppe von Transportfahrzeugen, als Steuerbefehl, z.B. zur Änderung der Fahrtgeschwindigkeit, oder als Datenbefehl, zur Übertragung bestimmter Daten an ein Fahrzeug oder eine Gruppe von Fahrzeugen, verwendet. Die Umsetzung eines solchen Bussystems obliegt dabei einem entsprechenden Fachmann und ist hinlänglich bekannt.
Die Trennung zwischen Adressbefehl, Steuerbefehl oder Datenbefehl könnte natürlich genauso gut durch den Bezug auf die einzelnen Phasen L₁, L₂, L₃, N bzw. eine Gruppe daraus bzw. durch Verwendung der positiven oder negativen Halbwelle erreicht werden. Ein entsprechender Fachmann hat dabei bei der Auslegung alle Freiheiten.

Ein solches Bussystem könnte dann z.B. beispielhaft, jedoch nicht einschränkend, folgendermaßen funktionieren:
Es wird ein Adressbefehl auf die Signalleitung SL gelegt, womit ein bestimmtes Transportfahrzeug ausgewählt wird und damit diesem Transportfahrzeug angedeutet wird, dass nun ein Steuerbefehl oder Datenbefehl für dieses Transportfahrzeug folgt. Im Anschluss wird also ein Steuerbefehl übertragen mit dem dem Transportfahrzeug z.B. mitgeteilt wird, dass es seine Geschwindigkeit zu verringern hat. Die neue Geschwindigkeit kann nun durch einen dritten Befehl, einem Datenbefehl, übertragen werden. Die Kommunikation kann dabei natürlich beliebig, insbesondere zeitlich optimiert, ausgeführt werden. Danach kann dem Transportfahrzeug durch einen weitern Befehl, z.B. wiederum dem gleichen Adressbefehl, mitgeteilt werden, dass die Kommunikation nun beendet ist

Weiters kann damit natürlich äquivalent auch ein bidirektionales Bussystem implementiert werden. Dazu könnte man beispielsweise eine weitere Signalleitung SL zur Kommunikation vom Fahrzeug zur jeweiligen Steuereinheit SE vorsehen, oder ein Kommunikationsprotokoll umgesetzt werden, dass mit einer einzigen Signalleitung SL auskommt.

Neben den einzelnen Steuereinheiten SE könnte auch noch eine übergeordnete zentrale Anlagensteuerung vorgesehen werden, die den gesamten Verkehr des Transportsystems zentral überwacht und steuert. Alternativ oder zusätzlich könnten die einzelnen Steuereinheiten natürlich auch gekoppelt sein und untereinander Information austauschen.

Die Signalleitung SL muss dabei natürlich nicht eine Schleifschiene oder eine andere physische Verbindung sein, sondern es wäre auch möglich eine berührungslose Übertagung vorzusehen, wobei dann unter "Leitung" der entsprechende berührungslose Übertragungskanal zu verstehen wäre und folglich die Verbindung zwischen Datenquelle und Datenempfänger ebenso berührungslos wäre.

## Patentansprüche

1. Verfahren zur Übertragung von Daten von einer Signalquelle zu einem Signalempfänger über zumindest eine Signalleitung, **dadurch gekennzeichnet, dass** von der Signalquelle für vorgegebene Zeitspannen jeweils ein einer Phase eines ein- oder mehrphasigen Netzes oder einem Nullleiter dieses Netzes entsprechendes Signal auf die Signalleitung geschalten wird, wobei die Zeitspannen kleiner der halben Periodendauer des einoder mehrphasigen Netzes gewählt wird, jeder der verwendeten Phasen und/oder dem Nullleiter ein Informationsgehalt zugeordnet wird, das auf die Signalleitung geschaltete Signal von zumindest einem Signalempfänger empfangen und von diesem der Informationsgehalt des übertragenen Signals ermittelt wird.

2. Übertragungsverfahren nach Anspruch 1, **dadurch gekennzeichnet, dass** der Informationsgehalt durch Vergleich des übertragenen Signals mit den Phasen und/oder dem Nullleiter des Netzes, oder einer gleichwertigen Methode, ermittelt wird.

3. Übertragungsverfahren nach Anspruch 1 oder 2, **dadurch gekennzeichnet, dass** die Phasen des ein- oder mehrphasigen Netzes oder der Nullleiter auf die Signalleitung durchgeschalten werden.

4. Übertragungsverfahren nach Anspruch 1 oder 2, **dadurch gekennzeichnet, dass** in der Signalquelle ein den Phasen des ein- oder mehrphasigen Netzes oder dem Nullleiter entsprechendes Signal erzeugt und auf die Signalleitung geschalten wird.

5. Übertragungsverfahren nach einem der Ansprüche 1 bis 4, **dadurch gekennzeichnet, dass** Zeitspannen von im Wesentlichen gleicher Dauer gewählt werden.

6. Übertragungsverfahren nach Anspruch 5, **dadurch gekennzeichnet, dass** die Zeitspannen derart gewählt werden, dass das Signal synchron zu den Phasen des Netzes übertragen wird.

7. Übertragungsverfahren nach einem der Ansprüche 1 bis 6, **dadurch gekennzeichnet, dass** der Informationsgehalt eines und/oder mehrerer, vorzugsweise aufeinanderfolgender, Zeitspannen einem Bit, also der Information "0" und "1", und/oder einem Bitmuster, also einer Folge von "0" und "1", entspricht.

8. Übertragungsverfahren nach einem der Ansprüche 1 bis 7, **dadurch gekennzeichnet, dass** positiven und negativen Signalen ein unterschiedlicher Informationsgehalt zugeordnet wird.

9. Übertragungsverfahren nach Anspruch 8, **dadurch gekennzeichnet, dass** der Informationsgehalt einer vorgegebenen Anzahl aufeinanderfolgender Zeitspannen im Signalempfänger als ein Befehl interpretiert wird.

10. Übertragungsverfahren nach Anspruch 9, **dadurch gekennzeichnet, dass** durch den Befehl im Signalempfänger eine vorgegebene Handlung ausgelöst wird.

11. Übertragungsverfahren nach einem der Ansprüche 1 bis 10, **dadurch gekennzeichnet, dass** im Signalempfänger kurzfristige zweideutige Signalzustände herausgefiltert werden, sodass zu jedem Zeitpunkt ein eindeutiges Signal empfangen wird.

12. Übertragungsverfahren nach einem der Ansprüche 1 bis 11, **dadurch gekennzeichnet, dass** damit ein hinlänglich bekanntes Busprotokoll implementiert wird.

13. Übertragungsverfahren nach einem der Ansprüche 1 bis 12, **dadurch gekennzeichnet, dass** unterschiedlichen Phasen bzw. der Nullleiter und/oder Gruppen von Phasen bzw. Nullleiter und/oder der Polarisierung des übertragenen Signals unterschiedliche Übertragungskanäle zugeordnet werden.

14. Vorrichtung zum Übertragen von Daten von einer Signalquelle an einen Signalempfänger, **dadurch gekennzeichnet, dass** in der Signalquelle eine Signalerzeugungseinheit vorgesehen ist, mit der für vorgegebene Zeitspannen ein Signal erzeugbar ist, welches einer Phase eines ein- oder mehrphasigen Netzes oder einem Nullleiter dieses Netzes entspricht, wobei die Zeitspanne kleiner der halben Periodendauer des ein- oder mehrphasigen Netzes ist und durch die Signalerzeugungseinheit jeder Phase und/oder dem Nullleiter ein Informationsgehalt zugeordnet ist, dieses erzeugte Signal mittels der Signalerzeugungseinheit auf eine Signalleitung schaltbar ist, zumindest ein Signalempfänger zum Empfangen des Signals mit der Signalleitung verbunden ist und der Signalempfänger eine Auswerteeinheit aufweist, mit der der Informationsgehalt aus dem übertragenen Signal ermittelbar ist.

15. Vorrichtung nach Anspruch 14, **dadurch gekennzeichnet, dass** die Signalerzeugungseinheit zum Durchschalten der Phasen des ein- oder mehrphasigen Netzes und/oder des Nullleiters ausgebildet ist.

16. Vorrichtung nach Anspruch 14, **dadurch gekennzeichnet, dass** in der Signalerzeugungseinheit ein Signal erzeugbar ist, welches einer Phasen des ein- oder mehrphasigen Netzes und/oder dem Nullleiter entspricht und dieses Signal auf die Signalleitung schaltbar ist.

17. Vorrichtung nach Anspruch 15 oder 16, **dadurch gekennzeichnet, dass** in der Signalerzeugungseinheit Schalter, vorzugsweise mechanische oder elektronische Schalter, vorgesehen sind, mittels denen die Signale auf die Signalleitung schaltbar sind.

18. Vorrichtung nach einem der Ansprüche 14 bis 17, **dadurch gekennzeichnet, dass** in der Auswerteeinheit das empfangene Signal mit den Phasen des ein- oder mehrphasigen Netzes und/oder dessen Nullleiter vergleichbar ist und damit die derzeitig anliegende Phase und/oder der Nullleiter und somit der zugeordnete Informationsgehalt ermittelbar ist.

19. Vorrichtung nach Anspruch 18, **dadurch gekennzeichnet, dass** ein Eingang und ein Ausgang der Auswerteeinheit elektrisch voneinander getrennt, vorzugsweise mittels Optokoppler, ausgeführt sind.

20. Vorrichtung nach Anspruch 18 oder 19, **dadurch gekennzeichnet, dass** die Auswerteeinheit mit einem Dateninterpreter verbunden ist, in dem der ermittelte Informationsgehalt, vorzugsweise in Form eines digitalen Signals, weiterverarbeitbar ist.

21. Vorrichtung nach Anspruch 20, **dadurch gekennzeichnet, dass** der Informationsgehalt einer vorgegebener Anzahl von aufeinanderfolgend empfangener Signale durch den Dateninterpreter als ein Befehl interpretierbar sind.

22. Vorrichtung nach Anspruch 21, **dadurch gekennzeichnet, dass** im Signalempfänger durch den Dateninterpreter eine dem Befehl entsprechende Handlung auslösbar ist.

23. Vorrichtung nach einem der Ansprüche 14 bis 22,**dadurch gekennzeichnet, dass** die Phasen bzw. der Nullleiter des ein- oder mehrphasigen Netzes und/oder das Datensignal über Schleifschienen übertragbar sind.

24. Transportsystem mit zumindest einer Steuereinheit und einer Anzahl von Transportfahrzeugen, die entlang einer Förderstrecke transportiert und von der Steuereinheit zumindest teilweise gesteuert werden, indem von der Steuereinheit zu den Transportfahrzeugen, bzw. umgekehrt, Daten übertragen werden, wobei die Daten mit dem Datenübertragungsverfahren nach einem der Ansprüche 1 bis 13 übertragen werden.

25. Transportsystem nach Anspruch 24, **dadurch gekennzeichnet, dass** Daten unidirektional und/oder bidirektional übertragen werden.

26. Transportsystem nach Anspruch 24 oder 25, **dadurch gekennzeichnet, dass** die Steuereinheit Daten an genau ein Transportfahrzeug und/oder gleichzeitig an eine Mehrzahl von Transportfahrzeugen sendet.

27. Transportsystem nach Anspruch 24, 25 oder 26, **dadurch gekennzeichnet, dass** die Steuereinheit und die Transportfahrzeuge zum Senden bzw. Empfangen von unterschiedlichen Datenformaten ausgeführt sind.

28. Transportsystem nach einem der Ansprüche 24 bis 27, **dadurch gekennzeichnet, dass** das Transportsystem eine Anzahl von einander getrennten Transportabschnitten aufweist, wobei zumindest zwei Abschnitten je eine Steuereinheit zugeordnet ist.

29. Transportsystem nach einem der Ansprüche 24 bis 28, **dadurch gekennzeichnet, dass** das Transportsystem eine Anlagensteuerung aufweist, mit der der Verkehr auf dem Transportsystem zumindest teilweise steuerbar ist.

30. Transportsystem nach einem der Ansprüche 24 bis 29, **dadurch gekennzeichnet, dass** das Transportsystem als Elektrohängebahn ausgeführt ist.
